# EUROPÄISCHE PATENTSCHRIFT

(11) **EP 2 017 853 B1**
(45) Veröffentlichungstag und Bekanntmachung des Hinweises auf die Patenterteilung: **12.09.2012**
(21) Anmeldenummer: 08160529.7
(22) Anmeldetag: 16.07.2008
(51) Int. Cl.: G21D 1/00, G21F 9/30, G21C 19/32

(54) **Verfahren zum Rückbau einer nukleartechnischen Anlage**
Method for dismantling a nuclear power plant
Procédé de démantèlement d'une centrale nucléaire

(30) Priorität: 18.07.2007 DE 102007033376
(43) Veröffentlichungstag der Anmeldung: 21.01.2009
(73) Patentinhaber: Areva NP GmbH, 91052 Erlangen (DE)
(72) Erfinder: Gottfried, Roland, 91083 Baiersdorf (DE); Strobel, Reinhardt, 90471 Nürnberg (DE)
(74) Vertreter: Mörtel & Höfner

(56) Entgegenhaltungen:
- DE-A1- 19 614 614
- DE-C1- 19 610 102
- JP-A- 2004 212 149
- JP-A- 2007 007 757

## Beschreibung

Die Erfindung bezieht sich auf ein Verfahren zum Rückbau einer nukleartechnischen Anlage, bei dem eine in einem mit Wasser gefluteten ersten Becken angeordnete Anlagenkomponente in einem ersten Schritt in großvolumige Einzelteile zerlegt wird.

Beim Rückbau einer nukleartechnischen Anlage, insbesondere eines Kernkraftwerks, müssen radioaktiv kontaminierte oder aktivierte Anlagenkomponenten weitgehend in kleinvolumige Einzelteile zerlegt werden, um in endlagerfähige Transportbehälter verpackt werden zu können. Die Zerlegearbeiten müssen dabei, wie dies beispielsweise aus der DE 44 45 171 C2 oder der DE 10 2005 050 942 A1 bekannt ist, aus Gründen des Strahlenschutzes unter Wasser durchgeführt werden, so dass der in der nukleartechnischen Anlage für die Zerlegearbeiten verfügbare Raum auf die dort vorhandenen, hinreichend großen Becken, im konkreten Fall das Reaktordruckbehälterbecken und das Brennelementlagerbecken beschränkt ist. Für die Zerlegearbeiten sind dabei je nach Anlagenkomponente und Bearbeitungsschritt unterschiedliche Zerlegevorrichtungen erforderlich, die gegebenenfalls abwechselnd eingesetzt werden müssen, um beispielsweise ein von der Anlagenkomponente abgetrenntes großvolumiges Einzelteil vor einem weiteren Zerlegen der Anlagenkomponente in endlagerfähige Kleinteile zu zerlegen. Der hierzu erforderliche Wechsel der Zerlegevorrichtungen führt jedoch zu einem erhöhten Zeitbedarf und damit zu erhöhten Kosten für den Rückbau der nukleartechnischen Anlage.

In der JP 08-240693 wird deshalb vorgeschlagen, die weitere Zerlegung eines aus dem Reaktordruckbehälter entnommenen großvolumigen Einzelteils im gefluteten Reaktorbecken an einem neben der Reaktorgrube im Reaktorbecken befindlichen Abstellplatz gleichzeitig mit einem zweiten Werkzeug vorzunehmen. Eine solche Vorgehensweise setzt jedoch entweder einen hohen Platzbedarf auf der Abstellfläche oder eine entsprechend feine Vorzerlegung voraus, um zu vermeiden, dass sich die beiden Zerlegewerkzeuge gegenseitig behindern.

Bei der aus der DE 196 14 614 A1 bekannten Vorgehensweise wird nur der Reaktordruckbehälter geflutet und es werden die abgetrennten Segmente zur Nachzerlegung über den Beckenrand in das benachbarte Brennelementlagerbecken gehoben. Eine solche Vorgehensweise ist jedoch mit einer hohen radioaktiven Belastung des Bedienpersonals verbunden.

Der Erfindung liegt nun die Aufgabe zugrunde, ein Verfahren zum Rückbau einer nukleartechnischen Anlage anzugeben, mit dem es mit einfachen Mitteln möglich ist, den Zeitbedarf für den Rückbau der nukleartechnischen Anlage und die Dosisbelastung des Bedienpersonals zu verringern.

Die genannte Aufgabe wird gemäß der Erfindung gelöst mit einem Verfahren mit den Merkmalen des Patentanspruches 1. Das Verfahren zum Rückbau einer nukleartechnischen Anlage, bei dem eine in einem mit Wasser gefluteten ersten Becken angeordnete Anlagenkomponente in einem ersten Schritt in großvolumige Einzelteile zerlegt wird, umfasst die folgenden Verfahrensschritte:
- im ersten Becken wird unter Wasser ein wasserdichter Transportbehälter abgestellt,
- in den mit Wasser gefluteten Transportbehälter wird unter Wasser das Einzelteil eingesetzt,
- der Transportbehälter mit dem darin eingesetzten Einzelteil wird aus dem ersten Becken gehoben und im gefluteten Zustand über der Wasseroberfläche zu einem ebenfalls mit Wasser gefluteten zweiten Becken transportiert und in diesem unter Wasser abgesetzt,
das Einzelteil wird im zweiten Becken nachzerlegt.

Durch diese Maßnahme ist es möglich, die Zerlegearbeiten gleichzeitig in situ an der Anlagenkomponente, d.h. bei eingebauter Anlagenkomponente, und an einem weiteren Zerlegeplatz an bereits von der Anlagenkomponente entnommenen großvolumigen Einzelteilen durchzuführen. Mit anderen Worten: Ein von der Anlagenkomponente entnommenes großvolumiges Einzelteil kann nachzerlegt werden, während die Zerlegearbeiten an der Anlagenkomponente selbst fortgeführt werden. Durch diese Maßnahme ist der Zeitbedarf für den gesamten Rückbau der Anlagenkomponente und damit der nukleartechnischen Anlage signifikant verringert.

Als Transportbehälter wird vorzugsweise eine einfache Wanne verwendet, die im ersten Becken abgesetzt wird.

Die Zerlegung erfolgt vorzugsweise mit einem Wasser-Abrasiv-Suspensions-Strahlschneiden (WASS), wobei vorzugsweise das einzelne Teil in der Wanne zerlegt wird.

Um eine Verunreinigung des Wassers im zweiten Becken zu vermeiden, wird in einer bevorzugten Ausgestaltung des Verfahrens vor dem Nachzerlegen des Einzelteils auf die Wanne ein Behälterschuss aufgesetzt, der über die Wasseroberfläche des gefluteten zweiten Beckens hinausragt.

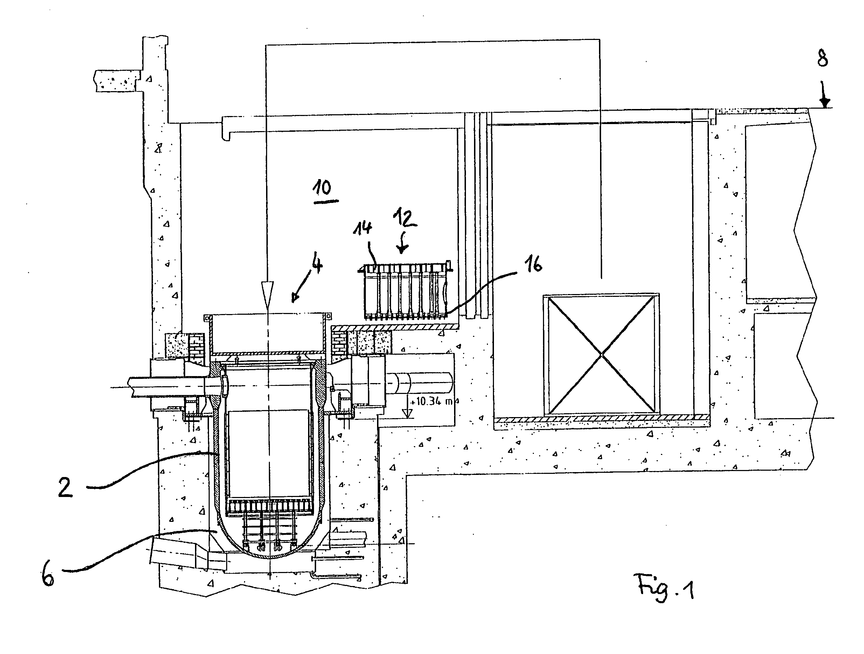

Zur weiteren Erläuterung der Erfindung wird auf das Ausführungsbeispiel der Zeichnung verwiesen, in deren Figuren 1 bis 4 das erfindungsgemäße Verfahren beispielhaft anhand eines Zerlegevorgangs am Reaktordruckbehälter eines Kernkraftwerks veranschaulicht ist.

Gemäß Fig. 1 ist auf einer nukleartechnischen Anlagenkomponente, im Beispiel ein geöffneter Reaktordruckbehälter 2 eines Kernkraftwerks, ein Transportbehälter 4 abgestellt, bei dem es sich um eine oben offene Wanne handelt. Neben der den Reaktordruckbehälter 2 aufnehmenden Reaktorgrube 6 befindet sich im bis zur Oberkante 8 mit Wasser gefluteten Reaktorbecken 10 ein bereits aus dem Reaktordruckbehälter 2 entnommenes Einbauteil 12, das im Beispiel ein den oberen Rost 14 und die obere Gitterplatte 16 umfassende Oberteil des Kerngerüstes ist.

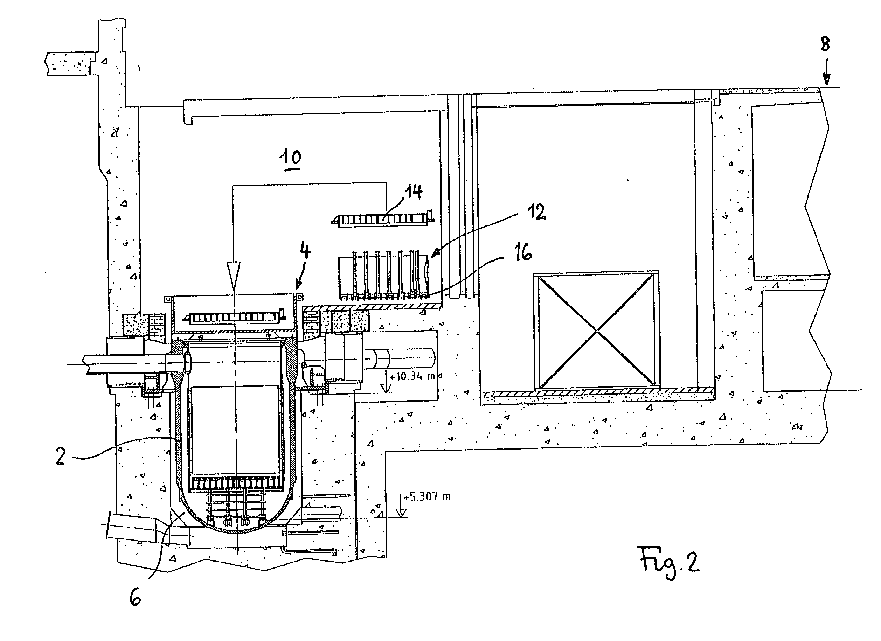

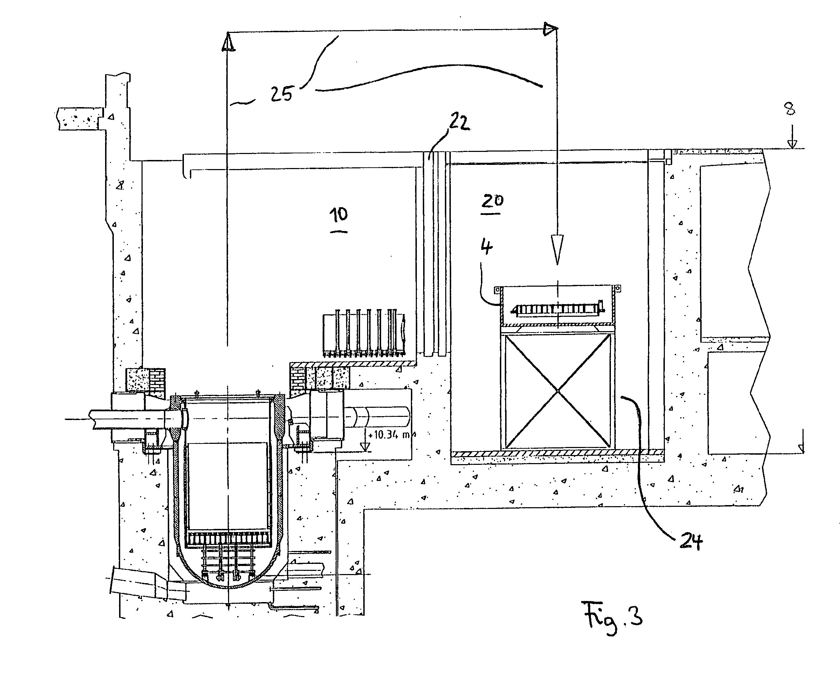

In einem darauffolgenden Schritt wird gemäß Fig. 2 ein großvolumiges Einzelteil dieses Oberteils, im Beispiel der obere Rost 14, vom Oberteil abgehoben und unter Wasser in den Transportbehälter 4 eingesetzt. Anschließend wird gemäß Fig. 3 der Transportbehälter 4 aus dem ersten Becken 10 ausgehoben und oberhalb der Wasseroberfläche über den Beckenrand (Oberkante 8) und über einer zwischen dem ersten Becken 10 und einem zweiten Becken 20, im Beispiel das Brennelementlagerbecken, befindlichen Schleuse 22 gehoben, über das zweite Becken 20 positioniert, in dieses abgesenkt und in diesem unter Wasser auf einem Gestell 24 abgestellt, wie dies durch die Pfeile 25 veranschaulicht ist.

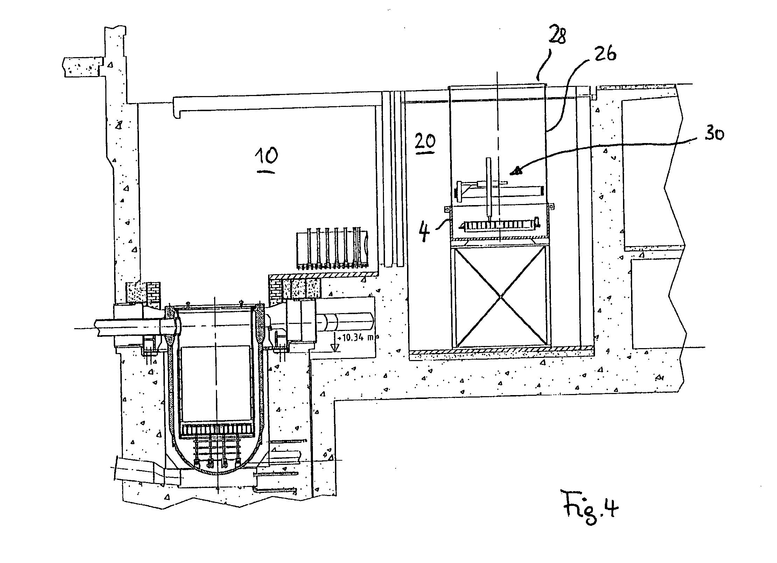

Auf dem Transportbehälter 4 wird gemäß Fig. 4 ein oben und unten offener Behälterschuss 26 montiert, dessen Oberkante 28 über die Wasseroberfläche bzw. die in der gleichen Höhe wie die Oberkante 8 des ersten Beckens 10 liegende Oberkante des zweiten Beckens 20 hinausragt. In diesen Behälterschuss 26 wird eine Zerlegevorrichtung 30 eingebracht, bei der sich im Beispiel um eine mit dem WASS-Verfahren arbeitende Schneidvorrichtung handelt.

Auf diese Weise können großvolumige Komponenten vom ersten Becken 10 in das zweite Becken 20 verbracht werden, deren Durchmesser größer ist als die lichte Weite der vorhandenen Schleuse zwischen dem erstem Becken 10 und zweitem Becken 20, ohne dass es hierzu notwendig ist, die Öffnung zwischen erstem und zweitem Becken 10 bzw. 20 zu vergrößern. Die großvolumigen Einzelteile können im zweiten Becken 20 zerlegt werden, während im ersten Becken 10 eine weitere Zerlegung der Anlagenkomponente in solche großvolumige Einzelteile erfolgen kann.

Nach erfolgter Nachzerlegung im zweiten Becken 20 wird der Transportbehälter 4 erneut zurück in das erste Becken 10 transportiert (Fig. 1) und kann dort erneut mit zwischenzeitlich bereitgestellten großvolumigen Einzelteilen bestückt werden.

## Patentansprüche

1. Verfahren zum Rückbau einer nukleartechnischen Anlage, bei dem eine in einem mit Wasser gefluteten ersten Becken (10) angeordnete Anlagenkomponente in einem ersten Schritt in groß-volumige Einzelteile (14) zerlegt wird, mit folgenden Verfahrensschritten:
- im ersten Becken (10) wird unter Wasser ein wasserdichter Transportbehälter (4) abgestellt,
- in den mit Wasser gefluteten Transportbehälter (4) wird das Einzelteil (14) eingesetzt,
- der Transportbehälter (4) mit dem darin eingesetzten Einzelteil (14) wird aus dem ersten Becken (10) gehoben und im gefluteten Zustand über der Wasseroberfläche zu einem ebenfalls mit Wasser gefluteten zweiten Becken (20) transportiert und in diesem unter Wasser abgesetzt,
das Einzelteil (14) wird im zweiten Becken (20) nachzerlegt.

2. Verfahren nach Anspruch 1, bei dem die Zerlegung mit einem Wasser-Abrasiv-Suspensions-Strahlschneiden Verfahren erfolgt.

3. Verfahren nach Anspruch 2, bei dem der Transportbehälter (4) eine Wanne ist.

4. Verfahren nach einem der Ansprüche 1 bis 3, bei dem das Einzelteil (14) in der Wanne zerlegt wird.

5. Verfahren nach Anspruch 4, bei dem vor dem Zerlegen des Einzelteils (14) auf die Wanne ein Behälterschuss (26) aufgesetzt wird, der über die Wasseroberfläche des gefluteten zweiten Beckens (20) hinausragt.

6. Verfahren nach einem der vorhergehenden Ansprüche, bei dem die Anlagenkomponente der Reaktordruckbehälter (2) eines Kernkraftwerks ist.

## Claims

1. Method for dismantling a nuclear power plant, wherein, in a first step, a plant component arranged in a first tank (10) flooded with water is broken down into individual parts (14) of large volume, said method comprising the following method steps:
- a watertight transport container (4) is set down in the first tank (10) under the water,
- the individual part (14) is introduced into the transport container (4) flooded with water,
- the transport container (4) with the individual part (14) introduced therein is lifted from the first tank (10) and, in the flooded state, is transported above the water surface to a second tank (20), likewise flooded with water, and is placed therein under the water,
the individual part (14) is broken down further in the second tank (20).

2. Method according to claim 1, wherein the breakdown is carried out by means of a water abrasive suspension jet cutting method.

3. Method according to claim 2, wherein the transport container (4) is a tub.

4. Method according to one of claims 1 to 3, wherein the individual part (14) is broken down in the tub.

5. Method according to claim 4, wherein a container shell ring (26) is fitted to the tub before the individual part (14) is broken down and protrudes beyond the water surface of the flooded second tank (20).

6. Method according to one of the preceding claims, wherein the plant component is the reactor pressure vessel (2) of a nuclear power plant.

## Revendications

1. Procédé de réfection d'une installation technique nucléaire pour lequel un composant d'installation disposé dans un premier bassin (10) rempli d'eau est désassemblé dans une première phase en éléments volumineux (14) avec les phases de procédé suivantes :
- dans le premier bassin (10) est déposé sous l'eau un caisson de transport (4) étanche à l'eau
- dans le caisson de transport (4) rempli d'eau est introduit l'élément (14),
- le caisson de transport (4) avec l'élément (14) qui y est introduit est soulevé du premier bassin (10) et transporté à l'état rempli au-dessus de la surface de l'eau vers un deuxième bassin (20) également rempli d'eau et déposé dans celui-ci sous l'eau,
l'élément (14) est redémonté dans le deuxième bassin (20).

2. Procédé selon la revendication 1 pour lequel le désassemblage a lieu avec un procédé de découpe par jet de matières abrasives en suspension dans l'eau.

3. Procédé selon la revendication 2 pour lequel le caisson de transport (4) est une cuve.

4. Procédé selon les revendications 1 à 3 pour lequel l'élément (14) est désassemblé dans la cuve.

5. Procédé selon la revendication 4 pour lequel avant le désassemblage de l'élément (14), une virole de caisson (26) est déposée sur la cuve, qui dépasse au-dessus de la surface de l'eau du deuxième bassin (20) rempli.

6. Procédé selon une des revendications précédentes pour lequel le composant d'installation est le caisson sous pression de réacteur (2) d'une centrale nucléaire.
